(19) Europäisches Patentamt
European Patent Office
Office européen des brevets

(11) **EP 2 989 139 B1**

(12) **EUROPEAN PATENT SPECIFICATION**

(45) Date of publication and mention
of the grant of the patent:
**24.10.2018 Bulletin 2018/43**

(51) Int Cl.:
***C08G 18/48*** *(2006.01)*

(21) Application number: **14725901.4**

(86) International application number:
**PCT/US2014/035226**

(22) Date of filing: **24.04.2014**

(87) International publication number:
**WO 2014/176390 (30.10.2014 Gazette 2014/44)**

(54) **POLYURETHANE ENCAPSULATE**

POLYURETHANEINKAPSELUNG

PRODUIT D'ENCAPSULATION EN POLYURÉTHANNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2013 US 201361816198 P**

(43) Date of publication of application:
**02.03.2016 Bulletin 2016/09**

(73) Proprietor: **Dow Global Technologies LLC
Midland, MI 48674 (US)**

(72) Inventors:
• **WATKINS, Avery L.
Pearland, TX 77584 (US)**
• **MEDINA, Juan Carlos
Lake Jackson, TX 77566 (US)**
• **LATHAM, Dwight
Clute, TX 77531 (US)**

(74) Representative: **Beck Greener
Fulwood House
12 Fulwood Place
London WC1V 6HR (GB)**

(56) References cited:
**WO-A1-93/07194          CN-A- 101 323 545
CN-A- 102 504 171       CN-A- 103 387 456
US-A- 4 483 974**

## Description

<u>Field</u>

Embodiments relate to a polyurethane encapsulate that includes a polyurethane film and a particulate material enclosed by the polyurethane film.

<u>Introduction</u>

Polyurethane coating films are being used as high performance coatings in various applications, e.g., including applications in which encapsulation of a water soluble material is desired. These water soluble materials include, e.g., water soluble plant nutrients in fertilizer granules, and pesticides. In the encapsulation of specific materials, e.g., the water soluble materials, the ability to control the amount of external water that is absorbed into the polyurethane coating film is desired. For example, the ability to control the permeability of external environmental components such as water is desired in an effort to control the release rate of the water soluble material from the polyurethane encapsulate.

Polyurethane coating films are used in the encapsulation of specific materials, and these polyurethane coating films are a reaction product of an isocyanate and a polyol. The resultant polyurethane polymers that form the polyurethane coating films have good physical properties; however, they may be sensitive to external environmental components such as water. The adjustment of the water absorbing capacity of a polyurethane coating in view of the water solubility of a mineral fertilizer encapsulated by the polyurethane coating (in the presence of a nutrient-charged synthetic resin ion exchanger) is described, e.g., in U.S. Patent No. 4,469,502. In particular, U.S. Patent No. 4,469,502 provides that when the water solubility of the mineral fertilizer exceeds a specific level, it is desirable to use a polyurethane coating film having a decreased water absorbing capacity. However, there is a need for methods for adjusting the water absorbing capacity of a polyurethane coating film.

Improvements with respect to attrition resistance, biodegradability, and extended release properties in the process of constructing particulate fertilizers having polyurethane coatings is described, e.g., in U.S. Patent No. 6,503,288. However, there is a need for improvements in water barrier properties of the resultant polyurethane coating. For example, there is a need for improvements with respect to adjusting water absorption and water vapor transmission of a final polyurethane coating film, while still providing a strong polyurethane coating film.

CN-A-102504171 discloses preparation of a slow release fertilizer envelope agent, whilst CN-A-101323545 discloses a polymer coated with encapsulation material for controlled release.

WO-A-93/07194 discloses a component mixed with a thermoplastic elastomer, whilst US-A-4,483,974 discloses the production of solid polyisocyanates stabilized by a polymer coating.

<u>Summary</u>

Embodiments relate to a polyurethane encapsulate that comprises a polyurethane film that is a reaction product of an aromatic isocyanate and a polyol, which polyol includes a butylene oxide based polyether polyol in an amount of at least 35 wt% based on a total weight of the polyol, and a particulate material that is enclosed by the polyurethane film. Preferred embodiments are defined in claims 2 to 9.

<u>Detailed Description</u>

Embodiments relate to polyurethane coating films that have good water barrier properties combined with mechanical strength. The polyurethane coating films also have mechanical strength based on the properties such as tensile strength and elastic modulus. The embodiments encompass a polyurethane coating film formed from a process that includes reacting at least one isocyanate and at least one polyol. When mixed, the isocyanate and polyol components form a finished polyurethane film that acts as a water barrier. It has been found that when the polyol used to form the polyurethane coating film has a minimum butylene oxide based polyol content of at least 35 wt%, based on a total weight of the polyol, water barrier properties such as hydrophobicity of the resultant polyurethane film are improved. Accordingly, it is not necessary to add additional components for increasing hydrophobicity. Further, it has been found that when the polyol includes at least the butylene oxide based polyol, a water vapor transmission rate and a percentage of water absorption/uptake are reduced.

Exemplary embodiments relate to a polyurethane coating film that is a reaction product of least an aromatic isocyanate and at least the butylene oxide based polyether polyol. The polyol may contain up to 65 wt%, based upon total polyol weight, of at least one other alkylene oxide based polyol (e.g., at least one other alkylene oxide based polyether polyol) other than the butylene oxide based polyether polyol. Polyols for use in forming the polyurethane coating film are generally prepared by using an alkylene oxide, such as at least one of butylene oxide, propylene oxide, and ethylene oxide, and an initiator having from 2 to 8 active hydrogen atoms. An exemplary use for the polyurethane coating film is for the encapsulation of a particulate material such as water soluble fertilizer thereby forming a polyurethane "encapsulate," so that even when the particulate material is placed in a water rich environment, the particulate material is periodically released from the encapsulate.

The polyols, e.g., the butylene oxide based polyether polyol and optionally the other alkylene oxide based polyol, are prepared from a polyol formation process. The polyol formation process includes reacting at least one initiator with at least one alkylene oxide. When forming the butylene oxide based polyether polyol, the at least one initiator reacts with butylene oxide. For example, butylene oxide may be coinitiated with at least two initiators to form the butylene oxide based polyether polyols. When forming the alkylene oxide based polyol (e.g., the alkylene oxide based polyether polyol), the at least one initiator reacts with another alkylene oxide such as ethylene oxide or propylene oxide. The initiator includes at least one functional group that is capable of reacting with the alkylene oxide to form an alkylene oxide based polyol. For example, the initiator may include from 2 to 8 active hydrogen atoms for reaction with the alkylene oxide. The initiator may be a linear, cyclic, or aromatic polyol. The polyol formation process may include using one reaction mixture or a plurality of reaction mixtures in stages in order to form the final polyols used to make the polyurethane coating film.

The above polyols (e.g., polyether polyols) may have a desired hydroxyl nature and equivalent weight. The polyols may have an OH value of from 25 to 800, such as from 25 to 600 or from 50 to 570 mg KOH/g. The polyols may include a low equivalent weight butylene oxide based polyol, e.g., the polyols may have an average molecular weight between 150 and 5000. Such polyols also preferably have a functionality of 2 to 8.

When the polyols are prepared by a combination of butylene oxide based polyether polyol and at least one other alkylene oxide based polyol, the butylene oxide based polyether polyol is present in an amount greater than 35 wt%, greater than 45 wt%, greater than 55 wt%, greater than 65 wt%, greater than 75 wt%, greater than 85 wt%, greater than 95 wt%, and/or at 100 wt% based on a total of 100 wt% of the polyols. The combination of polyols may be formed by mixing the butylene oxide based polyether polyol with the at least one other alkylene oxide based polyol.

For example, the mixture of at least two different polyether polyols may include 35 wt% to 99.9 wt% of the butylene oxide based polyether polyol, and 0.1 wt% to 65 wt% of the other alkylene oxide based polyols (such as at least one propylene oxide based polyether polyol), based on a total of 100 wt% of the polyols being used to form the polyurethane coating film. All individual values and sub-ranges between 35 wt% and 99.9 wt% for the amount of the butylene oxide based polyether polyol, and 0.1 wt% to 65 wt% for the amount of the other alkylene oxide based polyol are included herein and disclosed herein. For example, with respect to the amount of the butylene oxide based polyether polyol a lower limit may be one of 40, 45, 50, 55, 60, 65, 70, 75, 80, 85, 90, or 95 wt%, and an upper limit may be one of 40, 45, 50, 55, 60, 65, 70, 75, 80, 85, 90, 95, or 99 wt%, of which the lower limit is less than the upper limit. The polyol being used to form the polyurethane coating film may include a greater weight percentage of the butylene oxide based polyether polyol than the other alkylene oxide based polyol.

According to an exemplary embodiment, the mechanical integrity of polyurethane coating may be increased by using a combination of the butylene oxide based polyether polyol and at least one other alkylene oxide based polyol that has a functionality from 6 to 8 (e.g., the other alkylene oxide based polyol is a polyether polyol that a formed with at least a sucrose based initiator). For example, the other alkylene oxide based polyol may be a sucrose/glycerin initiated propylene oxide based polyol (e.g., VORANOL™ 360, which is a sucrose/glycerin initiated polyol having a functionality of approximately 4.6 and hydroxyl number of 360, available from The Dow Chemical Company). When the butylene oxide based polyether polyol and the other alkylene oxide based polyol are combined, and reacted with an aromatic isocyanate, the elastic modulus and/or tensile strength of the overall polyurethane coating film may be further increased relate to relative to a polyurethane product coating film made with 100 wt% of the butylene oxide based polyol based on the total weight of the polyol.

When only the butylene oxide based polyether polyol is prepared, the polyol formation process includes reacting at least one type of initiator having at least two hydroxyl and/or amine hydrogens per molecule with an amount of butylene oxide that is at 100 wt% based on the total amount of alkylene oxides in the polyol formation process. When the mixture of polyols (e.g., polyether polyols) are prepared, the polyol formation process includes reacting at least one type of initiator having at least two hydroxyl and/or amine hydrogens per molecule, 35 wt% to 99.9 wt% butylene oxide based on a total weight of the alkylene oxides in the polyol formation process, and 0.1 wt% to 65 wt% propylene oxide or ethylene oxide based on the total weight of the alkylene oxides in the polyol formation process. All individual values and sub-ranges between 35 wt% and 99.9 wt% for the amount of butylene oxide in the polyol formation process, and 0.1 wt% to 65 wt% for the amount of propylene oxide or ethylene oxide are included herein and disclosed herein.

Exemplary initiators for forming the polyols include, e.g., sucrose, fructose, ethylene glycol, diethylene glycol, propylene glycol, dipropylene glycol, tripropyleneglycol, polyethyleneglycol, polypropylene, trimethylolpropane, ethanediol, propanediol, butanediol, hexanediol, cyclohexane diol, pentaerythritol, sorbitol, glycol, erythritol, glycerin, neopentylglycol, trimethylolpropane glycerol, ethylene glycol, diethylene glycol, triethylene glycol, ethylene diamine, diethylene triamine, neopentyldiamine, and cyclohexanedimethanol. In an exemplary embodiment, the resultant butylene oxide based polyether polyols are glycerin initiated butylene oxide triols having a number average molecular weight between 500 and 2000.

A portion of the initiator may be one containing primary and/or secondary amino groups, such as ethylene diamine, hexamethylene diamine, diethanolamine, monoethanolamine, N-methyldiethanolamine, piperazine, aminoethylpiperazine, diisopropanolamine, monoisopropanolamine, methanolamine, dimethanolamine, toluene diamine (all isomers) and the like. A polyether polyol of particular interest is a non-amine-initiated polyol that has an average functionality of from 4.5 to 7 hydroxyl groups per molecule. According to exemplary embodiments, the polyol formation process used to form the polyols may include at least one initiator that is a linear or cyclic compound.

A catalyst may also be used for the production of polyether polyols, i.e., for the reaction between the alkylene oxide and the initiator, and the catalyst may be either anionic or cationic. For example, the catalyst may be added to a reaction mixture in the polyol formation process that includes the butylene oxide and at least one initiator. The catalysts may be, e.g., KOH, CsOH, boron trifluoride, a double metal cyanide complex (DMC) catalyst such as zinc hexacyanocobaltate, or a quaternary phosphazenium compound.

The isocyanate that is used to form the polyurethane coating film is an aromatic isocyanate, e.g., an aromatic organic polyisocyanate. The polyurethane coating film is formed in a process that may include the use of a single reaction mixture used to form the final product or may include a plurality of separate reaction mixtures that are applied at different stages to form the final product. The aromatic isocyanate desirably includes 1.5 to 3.2 isocyanate groups per molecule. The aromatic isocyanate may include at least one selected from the group of a phenyl group, a benzyl group, and a toluene group.

Exemplary polyisocyanates include m-phenylene diisocyanate, toluene diisocyanate (TDI), methylene diphenyl diisocyanate (MDI), polymethylene polyphenylisocyanate (PMDI), 1-methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, toluene triisocyanate, and dimethyldiphenylmethane tetraisocyanate. For example at least one selected from the group TDI, MDI, and PMDI may be used.

When one effects a reaction between an aromatic isocyanate and a polyol that has a minimum butylene oxide content as described herein, one may also use additional components such as at least one selected from the group of surfactants, catalysts, emulsifiers, preservatives, flame retardants, colorants, antioxidants, reinforcing agents, and fillers in preparing the polyurethane coating.

The surfactant may be used to regulate cell size and/or to stabilize the polyurethane coating as it expands and cures. One type of useful silicone surfactant is a polydimethylsiloxane type. Another useful type of silicone surfactant has a polysiloxane backbone that is modified with poly(oxyalkylene groups). Mixtures containing at least one surfactant of each type may be used.

The total amount of catalyst, when effecting a reaction between the aromatic isocyanate and the polyol having the minimum butylene oxide content as described herein, used may be 0.0015 to 5, more particularly from 0.01 to 1, part by weight per 100 parts by weight of the aromatic isocyanate. Catalysts for the reaction between the polyols and the isocyanate may be either anionic or cationic. Exemplary catalysts include, e.g., triethylamine, 1,4-diazabicyclo[2.2.2.]octane (DABCO), N-methylmorpholine, N-ethylmorpholine, N,N,N',N'-tetramethylhexamethylenediamine, 1,2-dimethylimidazol, and tin compounds such as tin(II)acetate, tin(II)octanoate, tin(II)laurate, dibutyltin dilaurate, dibutyltin dimaleate, dioctyltin diacetate and dibutyltin dichloride. The catalysts are optionally used alone or as mixtures thereof.

The addition of special additives that can adjust hydrophobicity may be avoided when the butylene oxide based polyether polyols are used in forming the polyurethane coating film. When the hydrophobicity of polyurethane coating films is adjusted through the use of these special additives, the special additives can often have a deleterious effect on other properties of the resultant coatings. Accordingly, there is a limit on the extent to which properties can be altered using special additives.

For example, the special additive of a fatty acid based additive that includes alkyl moieties containing more than 10 carbon atoms (such as a castor oil based additive) is avoided in the process of forming the polyurethane coating, e.g., such that the reaction mixture is substantially free of any fatty acid based additives. Further, the addition of a sulfur based additive, such as a sulfur containing solution that controls the release of a material enclosed by the polyurethane coating film by adjusting hydrophobicity, is also avoided (e.g., the resultant polyurethane coating film may entirely exclude sulfur).

To form the final polyurethane coating film, the polyols may be present in an amount of from 40 wt% to 80 wt% of the total weight of the isocyanate used in the process of forming the polyurethane coating film. All individual values and sub-ranges between 40 wt% and 80 wt% are included herein and disclosed herein. For example, the lower limit may be one of 45, 50, 55, 60, 65, 70, or 75 wt%, and the upper limit may be one of 45, 50, 55, 60, 65, 70, or 75 wt%, of which the lower limit is less than the upper limit.

A ratio of isocyanate groups to isocyanate-reactive groups (e.g., hydroxyl groups) in the reaction process for forming the polyurethane coating film may be 0.8:1 to 2.0:1. For example, an index of isocyanate groups to hydroxyl groups of at least unity in the reaction system, and more particularly greater than 1.05, is sought.

According to an exemplary embodiment, the process may include using an aromatic isocyanate having a functionality between 2 to 3, and a butylene oxide based polyether triol. For example, the 30 wt% to 50 wt% of PMDI, and 50 wt% to 70 wt % of the butylene oxide based polyether triol may be used, in which each wt% is based upon combined weight of PMDI and the butylene oxide based polyether triol and, when combined, equal 100 wt%. The weight ratio of the aromatic isocyanate to the total weight of the butylene oxide based polyether triol may be from 1:1.01 to 1:2. The total weight of butylene oxide based polyether triol may be greater than the total weight of the aromatic isocyanate.

According to an exemplary embodiment, the polyurethane coating film may be made by using plural component equipment that combines two components, e.g., component A that includes the aromatic isocyanate and any other isocyanate functional materials, and component B that includes the butylene oxide based polyether polyol and any other polyol components (e.g., with other additional components such as the catalyst for the reaction of the polyol and the isocyanate).

Polyurethane coating films derived from the embodiments possess excellent moisture barrier properties and exceptional hydrophobicity, while maintaining good mechanical strength. In particular, those skilled in the art would recognize that material characteristics such as hydrophobicity, percent of water absorption, and water vapor transmission rate of encapsulating films are useful in predicting the performance of the encapsulating films. For example, the percent of water absorption may be less than 1.3%. The water vapor transmission rate of polyurethane coating film according to exemplary embodiments may be from 0.005 to 0.275 g/1000* in$^2$*day, e.g., from 0.200 to 0.275 g/1000* in$^2$*day. Further, polyurethane coating films according to embodiments also simplify the coating process, e.g., by reducing the total number of components used, and thereby reducing the overall costs.

According to an exemplary embodiment, the excellent moisture barrier properties and exceptional hydrophobicity may be realized by a polyurethane encapsulating film that is a reaction product of at least the butylene oxide based polyether polyol and an aromatic isocyanate. The polyurethane encapsulating film may be a multi-layered coating that retains at least 20 wt% (e.g., at least 22 wt%, at least 24 wt%, at least 25 wt%, at least 27 wt%, etc.) of the initial total weight of the encapsulate material (such as urea) even after storage in water at room temperature for 24 hours. For example, the multi-layered coating may be formulated to retain between 20 wt% to 50 wt%, 21 wt% to 40 wt%, 20 wt% to 35 wt%, 22 wt% to 30 wt%, 24 wt% to 29 wt%, 25 wt% to 28 wt%, etc.) during the first 24 hours in storage within water at room temperature. The polyurethane encapsulating film may be prepared by using one of various methods such as a spraying process.

Suitable fertilizers that may be coated to form the particulate material in the polyurethane encapsulate include, e.g., natural and synthetic fertilizers. For example, the fertilizers may be calcium based, magnesium based, sulphate based, or phosphate based. The fertilizers may be used to form encapsulated fertilizer particles that contain from 0.5% to 15% by weight of the polyurethane coating film according to exemplary embodiments, based on the total weight of the encapsulated fertilizer particles.

Examples

The examples below are provided to be illustrative only and are not intended to define or limit the embodiments in any way.

The following materials are principally used:

| | |
|---|---|
| PAPI™ 27 | A PMDI (polymethylene polyphenylisocyanate) available from The Dow Chemical Company having a functionality of approximately 2.7, an isocyanate equivalent weight of approximately 134, and an NCO content by weight of 31.4 %. |
| BO TRIOL | A polyether polyol that is a glycerine initiated polyol based on butylene oxide, having an OH number of an approximate value of 277 and an equivalent weight of 202. |
| VORAPEL™ T5001 | A hydrophobic polyol (available from The Dow Chemical Company). |
| VORANOL™ 360 | A polyether polyol that is a sucrose/glycerine polyether, having a functional of an approximate value of 4.5 and an OH number of an approximate value of 3 (available from The Dow Chemical Company). |
| VORANOL™ CP-450 | A polyether polyol that is a glycerine propoxylated polyether triol, having an OH number of an approximate value of 380 (available from The Dow Chemical Company). |
| TEA | Triethanolamine (available from Sigma-Aldrich). |
| CASTOR OIL | A fatty acid based polyol having a functionality of 2.7, available from Sigma-Aldrich. |

Film samples (Working Example 1 and Comparative Examples A and B) and coating samples (Working Example 2 and Comparative Examples C and D) are prepared with the above materials.

Film Samples

With respect to Working Example 1 and Comparative Examples A and B, three different 20 mil (0.51 millimeter) films are prepared. Table 1, below, shows amounts of such materials in each of the films together with select mechanical data for each of such films.

**Table 1**

|  | **Example 1** Butylene Oxide-based polyol | **Comparative Example A** Propylene Oxide based polyol | **Comparative Example B** Castor oil based polyol |
|---|---|---|---|
| Polyol (wt gm) | 55 | 45 | 62 |
| PAPI™ 27 (wt gm) | 45 | 55 | 38 |
| Gel time (80°C, min) | 28 | 22 | 10 |
| Hardness (Shore D) | 74 | 70 | 18 |
| Tensile strength (psi) | 7685 | 10185 | 2920 |
| % Elongation | 6 | 9 | 66 |
| Modulus (psi) | 179k | 200k | 49k |
| Polyol Viscosity (@25°C, cP)) | 322 | 160 | 210 |

Tensile strength and elongation results for each of the exemplary films and films according to comparative examples are obtainable using ASTM D1708.

Table 2 below shows additional results with respect to the percentage of water absorption for the films of Table 1.

**Table 2**

| (Percentage of Water Absorption) | | | |
|---|---|---|---|
| Immersion time (days) | **Example 1** Butylene Oxide based polyol | **Comparative Example A** Propylene Oxide based polyol | **Comparative Example B** Castor oil based polyol |
| 24 | 0.78 | 1.61 | 0.10 |
| 48 | 0.84 | 1.61 | 0.10 |
| 120 | 1.11 | 1.61 | 0.10 |

In particular, Table 2 includes the percentage of water absorption at 70°C, as observed over a period of 24 to 120 days. The samples are dried using a paper towel prior to measuring mass. The mass is measured based on a change in mass after immersion. The percentage of water absorption is expressed as an increase in weight percentage using the following Formula 1:

Formula 1

Percent of water absorption = [(wet weight of sample – dry weight of sample / dry weight of sample] * 100.

Additional results with respect to water vapor transmission rate (WVTR) for the films of Table 1 are shown below in Table 3. The WVTR is measured on a MOCON™ Permatran-W 700 Water Vapor Permeability Instrument according to ASTM F-1249. Test conditions are the following: 37 C, a test gas of water vapor at 100% relative humidity, and a carrier gas of nitrogen at 0% relative humidity.

**Table 3**

| | **Example 1** Butylene Oxide based polyol | **Comparative Example A** Propylene Oxide based polyol | **Comparative Example B** Castor oil based polyol |
|---|---|---|---|
| WVTR (g/1000 * in$^2$ * days) | 0.247 | 0.288 | 0.520 |

As shown in Tables 2 and 3, above, the butylene based polyol film of Example 1 exhibits comparatively improved barrier properties with respect both the rate of water vapor permeation and percentage of water absorption over the propylene oxide based polyol film of Comparative Example A, and improved barrier properties with respect to water vapor permeation over the castor oil based polyol film of Comparative Example B. Further, the mechanical integrity in the butylene oxide based polyol film of Example 1 is maintained while the improvements with respect to water absorption and water vapor transmission are realized.

Coating Samples

With respect to Working Example 2 and Comparative Examples C and D, three different coatings are prepared. In particular, the coatings are prepared by placing 60 grams of urea pellets (99% available from Sigma Aldrich) in an approximately 8 ounce (0.24 L) plastic cup along with the requisite amount of polyol. Table 4, below, shows amounts of such materials in each of the coatings together with percentage of urea release data for each of such coatings.

**Table 4**

| | Example 2 | Comparative Example C | Comparative Example D |
|---|---|---|---|
| VORAPEL™ T5001 (wt gm) | 0.29 | -- | -- |
| VORANOL™ 360 (wt gm) | -- | 0.30 | -- |
| VORANOL™ CP-450 (wt gm) | -- | -- | 0.27 |
| TEA (wt gm) | 0.02 | -- | -- |
| PAPI™ 27 (wt gm) | 0.30 | 0.30 | 0.33 |
| Weight percent polyurethane coating based on total weight of coated pellets | 5.4 | 5.3 | 5.2 |
| Percentage of urea released after storage in water for 24 hours at 23 °C | 73 | 84 | 86 |

To form the coatings, the individual polyol components (which includes TEA for Working Example 2) from Table 4, above, are each stirred with the 60 grams of urea pellets in the plastic cup for 2-3 min. Then, the polyisocyanate component (PAPI™ 27) is added in the requisite amount and the resultant mixture is stirred for 2-3 min to assist in obtaining a sufficiently even distribution for the coating on the resultant coating urea. Then, the resultant coated urea is placed in an aluminum can in an oven and heated at 100 °C for 10 minutes. The coated area is mixed at least 3 times during this 10 minute period in an effort to reduce and/or minimize the sticking together of the particles. The coating procedure, which includes stirring the coated urea in the individual polyol components according to Table 4, above, for 2-3 minutes, then adding the polyisocyanate component and stirring for 2-3 minutes, and then placement in an aluminum can in an oven and heating at 100 °C for 10 minutes is repeated an additional 5 times (for a total of 6 coating steps with the material of Table 4) for a theoretical coating of 5.7 wt% (based on the total weight of the multi-layer coated urea pellets) for the resultant multi-layer coated urea. The theoretical coating is calculated based on the following:
Each coating layer is estimated to include 600 mg of material, as such the total weight of coating material employed is estimated as 3.6 grams.

$$\underline{\text{3.6 g of total coating material}} \quad \text{x} \quad 100\% = \text{theoretical coating of 5.7}$$

weight%

total theoretical weight of 63.6 g (urea + coating) however, because some coating is lost (e.g., on the walls of the containers during the coating process), the actual coating is approximately from 5.2-5.4 wt% for the multi-layer coated urea.

To determine the actual coating the final mass of the result multi-layer coated urea is measured and the actual coating is calculated based on the following:

(1) Final weight of material after coating – 60 g (starting weight of urea) = Actual

weight of coating material on the urea

$$(2) \quad \underline{\text{Actual weight of PU coating on the urea}} \quad \text{x } 100\% = \text{ actual wt\% coating}$$

Final weight of material after coating

After the coating procedure is completed, the multi-layer coated urea is heated at 100 °C for 1 hour and then stored in a jar at room temperature for 7 days prior to urea release testing. For the urea release testing, which results are reported in Table 4 as the percentage of urea released, approximately 4 g of the multi-layer coated urea is added in an approximately 2 ounce (0.06 L) glass jar having therein approximately 16 mL of deionized water. The mixture in the glass jar is swirled and then allowed to stand at approximately 23 °C for 24 hour. The solids are then filtered from the mixture with the aid of 25-30 mL of deionized water. The mass of urea released into the solution is determined after evaporation at approximately 100 °C for 20 hours. The mass of urea released by the multi-layer coated pellets divided by the total mass of urea is used to determine the percentage of urea released using the following Formula 2:

Formula 2

Percent of urea released = [(weight of sample) x (1- (weight percentage of

coating/100))].

In particular, the following equation: 4 g x (1-(wt% coating from Table 4/100)) is used to calculate the overall percentage of urea release from the multi-layer coated urea shown in Table 4, above.

**Claims**

1. A polyurethane encapsulate, comprising:

   a polyurethane film that is a reaction product of an aromatic isocyanate and a polyol, the polyol including a butylene oxide based polyether polyol in an amount of at least 35 weight percent based on a total weight of the polyol, and
   a particulate material that is enclosed by the polyurethane film.

2. The polyurethane encapsulate as claimed in claim 1, wherein the polyurethane encapsulate is a moisture resistant slow-release fertilizer particle encapsulate.

3. The polyurethane encapsulate as claimed in claim 1, wherein the butylene oxide based polyether polyol is a triol.

4. The polyurethane encapsulate as claimed in claim 1, wherein the butylene oxide based polyether polyol is another reaction product of a mixture that includes butylene oxide and a glycerol initiator.

5. The polyurethane encapsulate as claimed in claim 1, wherein the polyurethane film has a water vapor transmission rate of from 0.200 to 0.275 g/1000* in$^2$*day.

**6.** The polyurethane encapsulate as claimed in claim 1, wherein the reaction product is free of any fatty acid based additives.

**7.** The polyurethane encapsulate as claimed in claim 1, wherein the polyol also includes a propylene oxide based polyether polyol.

**8.** The polyurethane encapsulate as claimed in claim 7, wherein the polyol includes 35 to 99.9 wt% of the butylene oxide based polyether polyol and 0.1 to 65 wt% of the propylene oxide based polyether polyol, each weight percent being based on the total weight of the polyol.

**9.** The polyurethane encapsulate as claimed in claim 7, wherein the amount of the butylene oxide based polyether polyol is greater than an amount of the propylene oxide based polyether polyol based on the total weight of the polyol.


**Patentansprüche**

**1.** Eine Polyurethanverkapselung, beinhaltend:

eine Polyurethanfolie, die ein Reaktionsprodukt eines aromatischen Isocyanats und eines Polyols ist, wobei das Polyol ein Polyetherpolyol auf Butylenoxidbasis in einer Menge von mindestens 35 Gewichtsprozent, bezogen auf ein Gesamtgewicht des Polyols, umfasst, und ein partikelförmiges Material, das von der Polyurethanfolie umschlossen wird.

**2.** Polyurethanverkapselung gemäß Anspruch 1, wobei die Polyurethanverkapselung eine feuchtigkeitsbeständige Düngerpartikelverkapselung mit langsamer Freisetzung ist.

**3.** Polyurethanverkapselung gemäß Anspruch 1, wobei das Polyetherpolyol auf Butylenoxidbasis ein Triol ist.

**4.** Polyurethanverkapselung gemäß Anspruch 1, wobei das Polyetherpolyol auf Butylenoxidbasis ein weiteres Reaktionsprodukt einer Mischung ist, die Butylenoxid und einen Glycerolinhibitor umfasst.

**5.** Polyurethanverkapselung gemäß Anspruch 1, wobei der Polyurethanfilm eine Wasserdampfdurchlässigkeitsrate von 0,200 bis 0,275 g/1000*Quadratzoll*Tag aufweist.

**6.** Polyurethanverkapselung gemäß Anspruch 1, wobei das Reaktionsprodukt frei von jeglichen Zusatzstoffen auf Fettsäurebasis ist.

**7.** Polyurethanverkapselung gemäß Anspruch 1, wobei das Polyol auch ein Polyetherpolyol auf Propylenoxidbasis umfasst.

**8.** Polyurethanverkapselung gemäß Anspruch 7, wobei das Polyol zu 35 bis 99,9 Gew.-% das Polyetherpolyol auf Butylenoxidbasis und zu 0,1 bis 65 Gew.-% das Polyetherpolyol auf Propylenoxidbasis umfasst, wobei die Gewichtsprozente jeweils auf dem Gesamtgewicht des Polyols basieren.

**9.** Polyurethanverkapselung gemäß Anspruch 7, wobei die Menge des Polyetherpolyols auf Butylenoxidbasis größer ist als eine Menge des Polyetherpolyols auf Propylenoxidbasis, bezogen auf das Gesamtgewicht des Polyols.


**Revendications**

**1.** Une encapsulation de polyuréthane, comprenant :

un film de polyuréthane qui est un produit de réaction d'un isocyanate aromatique et d'un polyol, le polyol incluant un polyol de polyéther à base d'oxyde de butylène en une quantité d'au moins 35 pour cent en poids rapporté à un poids total du polyol, et une matière particulaire qui est enfermée par le film de polyuréthane.

**2.** L'encapsulation de polyuréthane telle que revendiquée dans la revendication 1, l'encapsulation de polyuréthane étant une encapsulation de particule de fertilisant à libération lente résistante à l'humidité.

3. L'encapsulation de polyuréthane telle que revendiquée dans la revendication 1, dans laquelle le polyol de polyéther à base d'oxyde de butylène est un triol.

4. L'encapsulation de polyuréthane telle que revendiquée dans la revendication 1, dans laquelle le polyol de polyéther à base d'oxyde de butylène est un autre produit de réaction d'un mélange qui inclut l'oxyde de butylène et un initiateur de glycérol.

5. L'encapsulation de polyuréthane telle que revendiquée dans la revendication 1, dans laquelle le film de polyuréthane a un taux de transmission de la vapeur d'eau de 0,200 à 0,275 g/1000*po$^2$*jour.

6. L'encapsulation de polyuréthane telle que revendiquée dans la revendication 1, dans laquelle le produit de réaction est dépourvu de tous additifs à base d'acide gras.

7. L'encapsulation de polyuréthane telle que revendiquée dans la revendication 1, dans laquelle le polyol inclut également un polyol de polyéther à base d'oxyde de propylène.

8. L'encapsulation de polyuréthane telle que revendiquée dans la revendication 7, dans laquelle le polyol inclut de 35 à 99,9 % en poids du polyol de polyéther à base d'oxyde de butylène et de 0,1 à 65 % en poids du polyol de polyéther à base d'oxyde de propylène, chaque pourcentage en poids étant rapporté au poids total du polyol.

9. L'encapsulation de polyuréthane telle que revendiquée dans la revendication 7, dans laquelle la quantité du polyol de polyéther à base d'oxyde de butylène est supérieure à une quantité du polyol de polyéther à base d'oxyde de propylène rapporté au poids total du polyol.

## REFERENCES CITED IN THE DESCRIPTION

**Patent documents cited in the description**

- US 4469502 A
- US 6503288 B
- CN 102504171 A
- CN 101323545 A
- WO 9307194 A
- US 4483974 A